(19) Europäisches Patentamt

European Patent Office

Office européen des brevets

(11) **EP 1 289 157 A1**

(12) **EUROPEAN PATENT APPLICATION**

(43) Date of publication:
05.03.2003 Bulletin 2003/10

(51) Int Cl.[7]: **H04B 1/16**, H04B 1/62

(21) Application number: 01120334.6

(22) Date of filing: 24.08.2001

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **Sony International (Europe) GmbH
10785 Berlin (DE)**

(72) Inventor: **Wildhagen, Jens,
c/o Advanced Technology Center
70327 Stuttgart (DE)**

(74) Representative: **Müller - Hoffmann & Partner
Patentanwälte,
Innere Wiener Strasse 17
81667 München (DE)**

(54) **Linear phase compander for FM broadcast**

(57) A compander for noise reduction of a FM-signal is described, wherein a linear phase compression and/or expansion is performed.

**Figure 2**

## Description

The present invention relates to a companding method for noise reduction of a FM signal, wherein the difference signal is compressed and transmitted within the FM signal.

Companders are generally known. A compander compresses the difference signal before the channel or storage medium and expands after the channel or storage medium. Therewith, audible noise distortions which are added to the transmitted or stored signal are reduced by such a compander. One of the best known companders for tape recording purposes is the Dolby-B-type noise reduction system. Such a syllable compander calculates the slowly varying envelope amplitude of the audio signal and compresses/expands the audio signal according thereto. A detailed description of companders and in particular of the Dolby NR (Noise Reduction) system can be found under "http://www.dolby.com/ken".

Further, the usage of a compander for FM broadcast is also generally known. In this field a noise reduction of the difference signal noise is achieved by compressing the difference signal in the transmitter and transmitting the compressed difference signal additionally within the normally transmitted FM signal. According to Emil L. Torick and Thomas B. Keller "Improving the signal-to-noise ratio and coverage of FM stereophonic broadcasts", J. Audio Enc. Soc., Vol. 33, No. 12, New York, 1985 December, pages 938-943, presented under the title "FMX Studio Broadcast System" at the 79th convention of the Audio Engineering Society, 1985, October 12-16, the compressed difference signal is added to the in-quadrature component of the modulated 38 kHz carrier, i.e. the compressed difference signal is transmitted in quadrature to the uncompressed difference signal. Alternatively, DE 41 28 045 A1 describes to add the compressed difference signal to the lower sideband of the modulated 38 kHz carrier and to subtract the compressed difference signal from the upper sideband of the modulated 38 kHz carrier before transmission of the so modified multiplex signal. A mathematical analysis of both described modulation systems leads to the finding that the better and therefore preferred solution is the method described in DE 41 28 045 A1.

Both of the above described FM companding systems use a broadband compander which generates so-called noise modulation effects due to the varying noise suppression. These noise modulation effects are more annoying to a listener than a constant noise floor and therefore have to be eliminated. As described in the above reference introduction to noise reduction on the Dolby homepage, noise modulation effects can be avoided in multiband companders. Two types of multiband companders are described: sliding band companders and fixed band companders.

However, both types of companders generate group delay distortions in the compressed audio signal which result in an increase of the peak amplitude of the FM multiplex signal and which result in additional distortions in conventional (existing) FM broadcasts receivers caused by crosstalk from the compressed difference signal to the conventional difference signal.

It is therefore the object underlying the present invention to provide an improved companding method for noise reduction of a FM signal according to which these distortions are reduced.

This object is achieved by a companding method according to the present invention as defined in independent claim 1. A FM transmitter according to the present invention is defined in independent claim 9 and a FM receiver according to the present invention is defined in independent claim 15. Preferred embodiments thereof are respectively defined in the respective following dependent subclaims. Computer program products according to the present invention are defined in claims 19 to 21.

The companding method for noise reduction of a FM signal according to the present invention wherein the compressed signal is transmitted within the FM multiplex signal therefore comprises a linear phase multiband compression and/or multiband expansion. By the linear phase response of the compander according to the present invention an increase of the peak amplitude of the multiplex signal and additional cross-talk distortions in conventional (existing) FM broadcast receivers are minimized, since the phase of the compressed difference signal is identical to the phase of the (conventional) difference signal.

A FM transmitter according to the present invention therefore comprises a compressor which performs a linear phase compression and a FM receiver according to the present invention comprises an expander which performs a linear phase expansion.

According to the present invention the linear phase compression if preferably performed by splitting the difference signal into n-subband signals with a multi-band filter having a respective linear phase response for each of the subbands, multiplying each of the n-subband signals with a respective compressor gain, and adding all n-compressed subband signals to generate the linear phase compressed difference signal. According to the present invention the multi-band linear phase expansion is preferably performed by splitting the received compressed difference signal into n-subband signals with a multiband filter having a respective linear phase response for each of the subbands, multiplying each of the n-subband signals with a respective expander gain, and adding all n-expander subband signals to one expanded difference signal.

According to the present invention a multi-band linear phase compression and/or expansion is performed therewith which results in a much better performance than a broad-band compression and/or expansion. Noise modulation effects are preferably also minimized therewith by the FM signal compander according to the present invention. The composite transfer function of the multi-band filter used preferably for compression and/or of the multi-band filter used for expansion has a flat frequency response.

According to the present invention the linear phase compressed difference signal is preferably filtered with a complementary equalization filter before transmission. The equalization filter equalizes amplitude distortions of the overall compander (i.e. compressor + expander) transfer function. The equalization of the amplitude distortions of the overall compander transfer function avoids a strong reduction of the audio channel separation which would result from an amplitude distortion in the transition of adjacent subbands of the multiband linear phase filter bank in case of non-rectangular subband filters which comprise overlapping subbands.

According to the present invention the transfer function of the complementary equalization filter is ideally determined depending on the respective compressor gains for respective subbands. The equalization filter transfer functions might alternatively be determined by an approximation depending on the respective compressor gains and a scaling depending on the respective compressor gains.

Further features and advantages of the companding according to the present invention will become apparent from the following description of an exemplary embodiment thereof taken in conjunction with the accompanying figures, wherein

**Fig. 1** shows a comparison of generalized block diagrams of a two-path com-pressor and expander configuration according to the prior art and a single-path compressor and expander configuration according to the present invention for stationary signals;

**Fig. 2** shows a two-band linear phase compressor and expander configura-tion with a complementary equalizer of the transition between both subband filters;

**Fig. 3** shows the transfer functions of the compressor, the expander and the overall compander configuration shown in Fig. 2 without equalizer, wherein the upper sideband is compressed by 12dB;

**Fig. 4** shows a two-band linear phase compressor and expander configura-tion with an approximation with the equalization filter according the preferred embodiment of the present invention;

**Fig. 5** shows the minimum audio channel separation of the compander shown in Fig. 4 with a first order equalization filter approximation;

**Fig. 6** shows a minimum audio channel separation of the compander shown in Fig. 4 with a second order equalization filter approximation;

**Fig. 7** shows an 14-channel complementary filter bank as a first example for a multi-band filter used according to the present invention;

**Fig. 8** shows the transfer function of the subband filters of the 14' channel complementary filter band shown in Fig. 7;

**Fig. 9** shows a 26-channel hybrid filter bank consisting of complementary filters and two oversampled DFT filter banks as a second example of a multi-band filter according to the present invention;

**Fig. 10** shows the transfer function of the subband filters of the subband fil-ters of the 26-channel hybrid filter bank shown in Fig. 9; and

**Fig. 11** shows an oversampled 32-channel DFT filter bank according to a third example of a multi-band filter according to the present inven-tion.

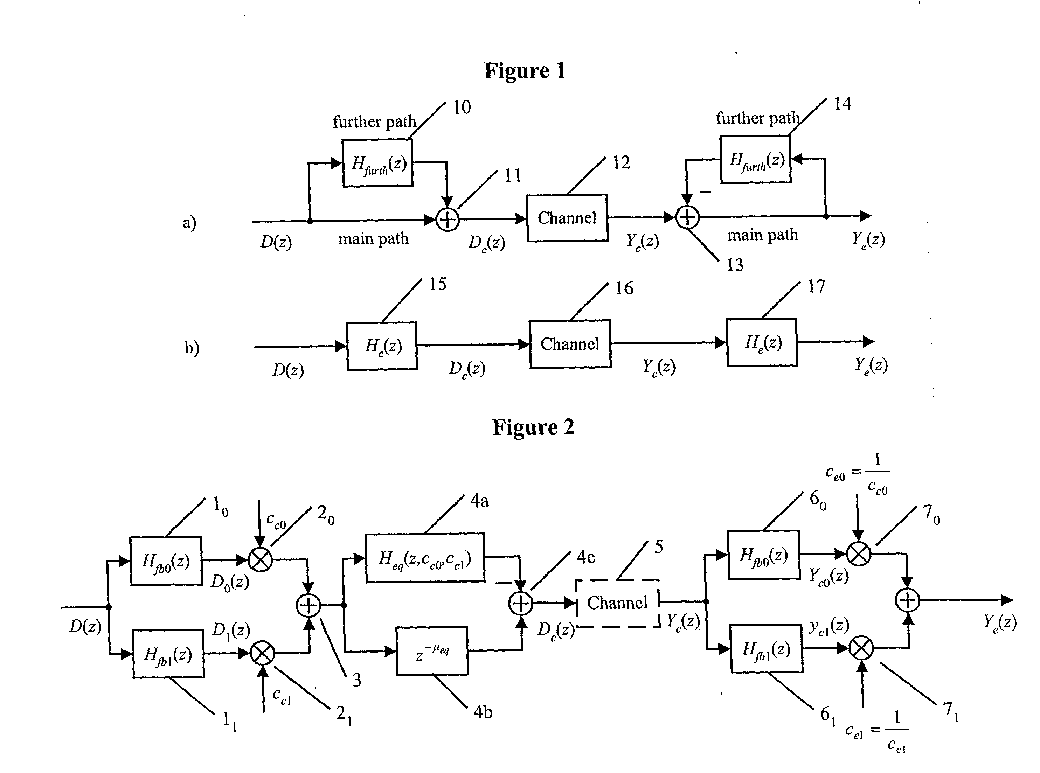

State of the art analogue multi-band companders generally consist of a two-path compressor and a two-path expander configuration as it is depicted in Fig. 1a and described in the above referenced introduction to noise reduction on the Dolby homepage. The compressor and the expander consist of a so-called main path and a further path. The input difference signal $D(z)$ is fed - in the further path - via a further path processor 10 with a transfer function $H_{furth}(z)$ to an adder 11 and - in the main path - directly to the adder 11. The adder 11 outputs the compressed difference signal $D_c(z)$ through a transmission channel 12 as received compressed difference signal $Y_c(z)$ to a subtractor 13 which subtracts its output signal therefrom after said output signal has been processed by a second further path processor 14. The output signal of the subtractor 13 is the expanded received compressed difference signal $Y_e(z)$. The transfer function of the second further path processor 14 is equal to that of the first further path 10, i.e. it can also be described as $H_{furth}(z)$. Both further path processors can be described by this transfer function, since - in this example - a stationary compressor input signal is assumed. In the idealized case i.e. $Y_c(z) = D_c(z)$, the expander output signal $Y_e(z)$ is identical to the compressor input signal $D(z)$. A description of the transfer functions is then given by the formulae:

$$D_c(z)/D(z) = (1 + H_{furth}(z)) \qquad (1)$$

$$Y_e(z)/Y_c(z) = 1/(1 + H_{furth}(z)) \qquad (2)$$

$$Y_e(z)/D(z) = 1 \qquad (3)$$

From equation (1) follows that the two-path multi-band compressor configuration has a non-linear phase response. As stated above, the two-path compressor configuration according to the prior art is therefore not suited for the compression of the FM difference signal.

In the following the single path compressor and expander configuration according to the present invention which is shown in Fig. 1b and which generally processes the input difference signal $D(z)$ with a compression 15 with linear phase transfer function $H_c(z)$ before the compressed difference signal $D_c(z)$ which is transmitted via a channel 16 is input as received compressed difference signal $Y_c(z)$ to the expander 17 with linear phase transfer function $H_e(z)$ and output therefrom as expanded compressed difference signal $Y_e(z)$ is described in more detail.

Generally, the compressor 15 and the expander 17 might be realized with the same band splitting filter bank. For the sake of simplicity, in the following a two-band compander as shown in Fig. 2 is considered. This two-band compander can easily be adapted to a multi-band compander. For the sake of simplicity, the compressor input signal is assumed to be a stationary sinusoidal signal, so the compressor gains $C_{c0}Ck)$ and $c_{c1}(k)$ are constant, i.e. $c_{c0}(k) = c_{c0}$, and $c_{c1}(k) = c_{c1}$.

In the two-band linear phase compressor shown in Fig. 2 on the left hand side of the transmission channel 5 the input difference signal $D(z)$ is split by a two-band filter 1 comprising a first sub-filter $1_0$ and a second sub-filter $1_1$ which both receive the difference signal $D(z)$ into two-subband signals, i.e. a first subband signal $D_0(z)$ and a second subband signal $D_1(z)$. The first subband filter $1_0$ has a transfer function $H_{fb0}(z)$ and the second subband filter $1_1$ has a transfer function $H_{fb1}(z)$. The composite transfer function of the two-channel filter bank has a flat frequency response, i.e.

$$H_{fb0}(z) + H_{fb1}(z) = z^{-\mu fb}.$$

Both subband signals are multiplied with a respective compressor gain by a respective multiplier 2 before they are combined to one signal by an adder 3, i.e. the first subband signal $D_0(z)$ is multiplied with a first compressor gain $c_{c0}$ in a first multiplier $2_0$ and the second subband signal $D_1(z)$ is multiplied by a second compressor gain $c_{c1}$ in a second multiplier $2_1$. The combined signal output from the adder 3 is filtered with a filter 4 that has a structure like a complementary filter and is therefore named complementary equalization filter in the following.

The complementary equalization filter 4 consists of a parallel connection of a delay element 4b and an equalization filter 4a having a transfer function $H_{eq}(z, c_{c0}, c_{c1})$ and a subtractor 4c subtracting the output signal of the equalization filter 4a from that of the delay element 4b. The complementary equalization filter 4 receives the linear phase compressed difference signal and outputs an equalized compressed difference signal $D_c(z)$ in which the distortions resulting from a non-rectangular multi-band subband filter, here the two-band filter bank 1, are minimized. In the following the transmission chain of the compressed difference signal is idealized, i.e. $Y_c(z) = D_c(z)$.

The expander splits the transmitted compressed difference signal $Y_c(z)$ into subband signals using an identical filter bank 6 to that used in the compressor. The resulting subband signals are respectively multiplied with the expander gains that are ideally identical to the delayed, inverted compressor gains, i.e. the first subband signal $Y_{c0}(z)$ output by the first subband filter $6_0$ having the transfer function $H_{fb0}(z)$ is multiplied in a first multiplier $7_0$ with an expander gain $c_{e0}=1/c_{c0}$, and the second subband signal $Y_{c1}(z)$ output by the second subband filter $6_1$ having the transfer function $H_{fb1}(z)$ is multiplied in a second multiplier $7_1$ by a second expander gain $c_{e1}=1/c_{c1}$. Both expanded subband signals are added in an adder 8 which outputs the expanded received compressed difference signal $Y_e(z)$.

The compressor gains and expander gains are preferably calculated for each subband corresponding to the teaching given in the Applicant's parallel European patent application "Method for noise reduction of a FM signal" which content is herewith incorporated into this specification by reference, i.e. on basis of a combination of the subband sum signal and the subband difference signal.

The necessity of the complementary equalization filter for non-rectangular multi-channel filter banks can be explained best by the following example on the basis of the two-band linear phase compander shown in Fig. 2. In the example, one subband of the two-band compressor is not compressed and the other subband is compressed by 12dB. The complementary equalization filter 4 has no influence to the compressor transfer function, i.e. $H_{eq}(z, c_{c0}, c_{c1})= 0$.

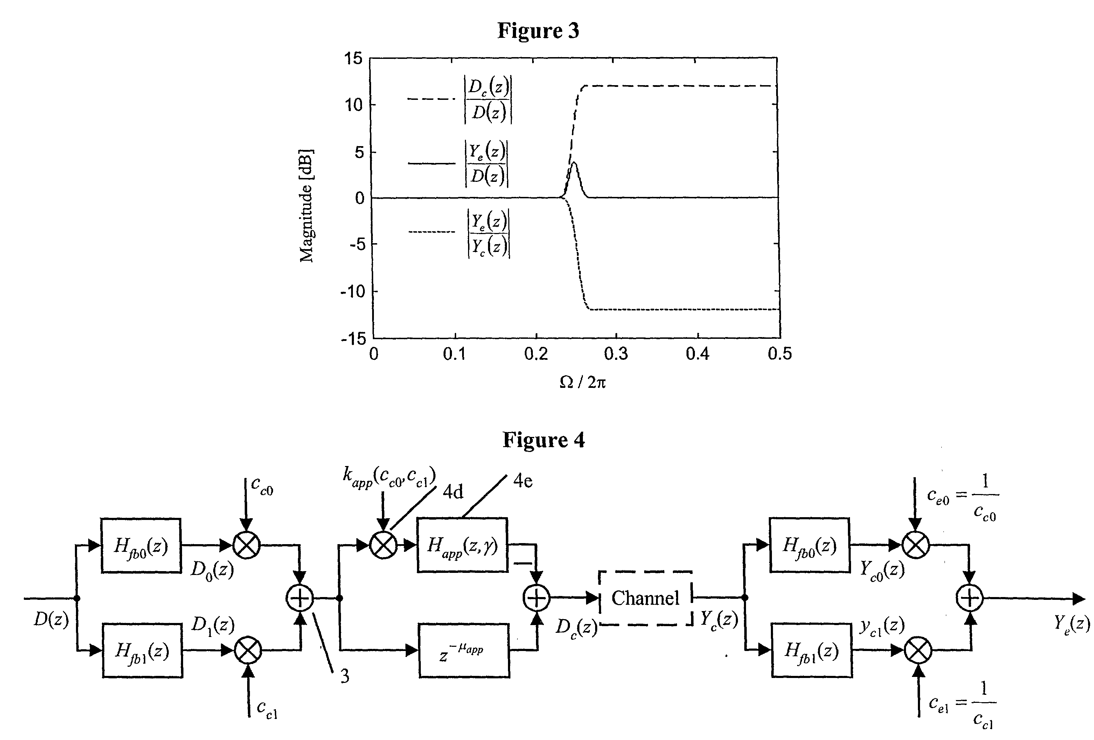

The slashed line in Fig. 3 shows the transfer function of the compressor $|D_c(z)/D(z)|$. The dotted line shows the transfer function of the expander $|Y_e(z)/Y_c(z)|$. The overall transfer function of the compander, i.e. of the compressor and the expander, $|Y_e(z)/D(z)|$ which is depicted by a solid line in Fig. 3 is disturbed in the transition region of both adjacent subbands, since these subbands have a slight overlap.

Amplitude distortions of the overall compander transfer function lead to a strong reduction of the audio channel separation and should therefore preferably be equalized in the compressors complementary equalization filter. An equalization in the expander is - of course - also possible. The compressor gain dependent equalization filter transfer function $H_{eq}(z, c_{c0}, c_{c1})$ is calculated in the following:

The overall transfer function of the two-band compressor shown in Fig. 2 is

$$Y_e(z)/D(z) = (c_{c0}H_{fb0}(z) + c_{c1}H_{fb1}(z)) \cdot (z^{-\mu eq} - H_{eq}(z,c_{c0},c_{c1})) \cdot (H_{fb0}(z)/c_{c0}+H_{fb1}(z)/c_{c1})) \qquad (4)$$

Ideally the output signal of the expander $Y_e(z)$ is the delayed input signal of the compressor $D(z)$. With the group delay $z^{-\mu fb}$ of the first filter bank 1 and the group delay $z^{-\mu eq}$ of the equalization filter 4 as well as the group delay $z^{-\mu fb}$ of the second filter bank 6 follows:

$$Y_e(z)/D(z) = z^{-2\mu fb}\, z^{-\mu eq} \qquad (5)$$

With the aid of the composite transfer function of the two-channel filter bank and formulae (4) and (5) as well as the definition of the zero-phase transfer functions $\tilde{H}_{fb0}(z)$ and $\tilde{H}_{eq}(z,c_{c0},c_{c1})$, i.e.

$$H_{fb0}(z) = z^{-\mu fb}\, \tilde{H}_{fb0}(z) \qquad (6)$$

$$H_{eq}(z,c_{c0},c_{c1})) = z^{-\mu eq}\, \tilde{H}_{eq}(z,c_{c0},c_{c1}) \qquad (7)$$

follows for the equalization filter

$$\tilde{H}_{eq}(z,c_{c0},c_{c1}) = 1 - 1/((c_{c0}/c_{c1}\, \tilde{H}_{fb0}(z) + (1 - \tilde{H}_{fb0}(z))) \cdot \qquad (8)$$
$$(c_{c1}/c_{c0}\, \tilde{H}_{fb0}(z) + (1 - \tilde{H}_{fb0}(z))))$$

The transfer function $\tilde{H}_{eq}(z,c_{c0},c_{c1})$ of the equalization filter 4 depends on the compressor gains $c_{c0}$ and $c_{c1}$. A change of the compressor gains results in a change of the transfer function of the equalization filter 4. This requires a change of the coefficient set of the equalization filter 4 depending on the compressor gains. As a consequence, a large memory is required in the transmitter to store the different coefficient sets.

According to the present invention a more elegant solution is determined by one compressor gain independent equalization filter approximation $H_{app}(z, \gamma)$ which is scaled by a compressor gain dependent factor $k_{app}=k_{app}(c_{c0}, c_{c1})$:

$$H_{eq}(z, c_{c0}, c_{c1})=k_{app}(c_{c0}, c_{c1})\, H_{app}(z, \gamma).$$

Fig. 4 shows such a two-band compressor/expander configuration with an approximation of the equalizer which differs to Fig. 2 only in that the equalization filter 4a is replaced by a multiplier 4d multiplying the output signal of the adder 3 with $k_{app}(c_{c0}, c_{c1})$ which is followed by the equalization filter approximation 4e with the transfer function $H_{app}(z, \gamma)$.

The transfer function Happ(z, $\gamma$) of the equalization filter approximation 4e is calculated from equation (8) under the condition $c_{c0}/c_{c1}$ = constant:

$$\tilde{H}_{app}(z, \gamma) = \tilde{H}_{eq}(z, c_{c0}, c_{c1}) \text{ with } c_{c0}/c_{c1} = \gamma \qquad (9)$$
$$= 1 - 1/((\gamma \tilde{H}_{fb0}(z) + 1 - \tilde{H}_{fb0}(z)) \cdot (1/\gamma \tilde{H}_{fb0}(z) + 1 - \tilde{H}_{fb0}(z)))$$

The approximation of the equalization filter leads to an error err(z) of the overall compander which is determined according to the following formula:

$$Y_e(z)/D(z) = z^{-2\mu fb} z^{-\mu app}(1 + err(z)) \qquad (10)$$

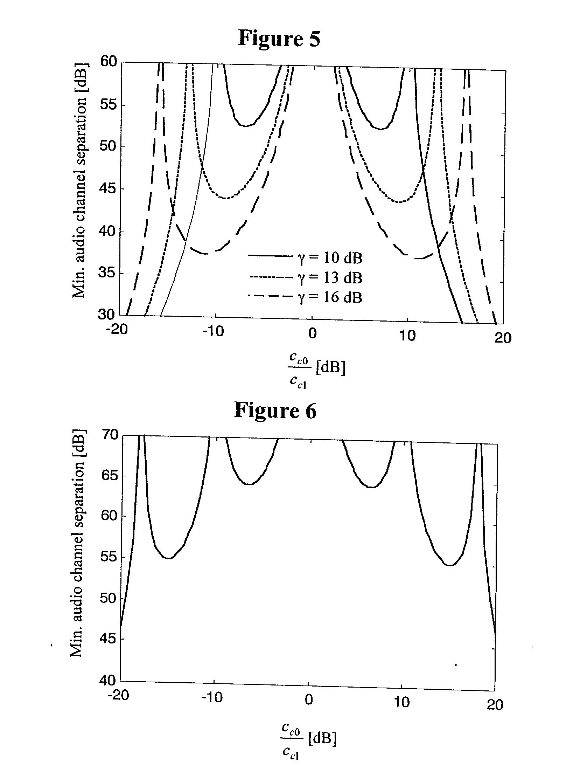

The optimum scaling factor $k_{app}(c_{c0}, c_{c1})$ is calculated according to the present invention by a minimization of the error err(z). The human auditory system integrates sound intensities within the critical bandwidth to one entire sound intensity. The transition region between two adjacent subbands should lie within the critical bandwidth, so that the ear integrates the intensity of the error to one entire error sound intensity. The entire sound intensity is minimized according to the present invention by minimization of the mean square error or err(z). Fig. 5 depicts the minimum achievable audio channel separation for the optimum scaling of three different approximations $H_{app}(z, \gamma)$ with ($\gamma$=10dB, 13dB, 16dB). Depending on the parameter $\gamma$, a high audio channel separation can be achieved for a small range of compressor gains $c_{c0}/c_{c1}$ or, alternatively, a wider range can be covered by with a limited audio channel separation.

Depending on the IF filter bandwidth, high end home receivers achieve an audio channel separation of up to 50 dB. Receivers are usually adjusted to achieve the highest audio channel separation at a frequency of 1 kHz. The audio channel separation is limited to lower and higher frequencies down to 25...30 dB.

The audio channel separation can be increased over a wide range of compressor gains by increasing the order of the equalization filter approximation. Fig. 6 depicts the minimum achievable audio channel separation of a second order equalization filter approximation.

However, a first order approximation filter is in most times sufficient for the equalization of the transition region. This comes from the fact that the bandwidth of the subband filters of the control filter bank is higher than the bandwidth of the subband filters of the audio filter bank. The wider bandwidth of the control filter banks subband filters is necessary to achieve a filter bank independent compression of a difference signal.

In case of a high signal power in the transition region of two adjacent subband signals the ratio $c_{c0}/c_{c1}$ is close to 1 and the audio channel separation of the signal components in the transition region is high.

A big difference of compressor gains of adjacent subband signals is only possible for the scenario of a high signal power in one subband in combination with a low signal power in the adjacent subband and the transition region to the adjacent subband. In this case the audio channel separation of the signal components in the transition region is limited, but the signal power of these signal components are low compared to the signal power of the subband signals. The distortions of the audio channel separation in the transition region therefore have a minor impact on the entire audio channel separation.

As a result of this discussion, the equalization filter according to the preferred embodiment of the present invention is approximated according to Fig. 4 by one approximation filter with $\gamma$=10dB. The approximation filter is designed according to equation 9 and the scaling factor of the approximation filter can be simplified to:

$$k_{app}(c_{c0}, c_{c1}) = 4.0824 \, ((c_{c0}/c_{c1} + 2.2720) \cdot (c_{c0}/c_{c1} + 0.4401) \cdot$$

$$(c_{c0}/c_{c1} + 0.9997) \cdot (c_{c0}/c_{c1} + 1.0003)) /$$

$$((c^2_{c0}/c^2_{c1} + 4.4016 \, c_{c0}/c_{c1} + 6.1754) \cdot$$

$$(c^2_{c0}/c^2_{c1} + 0.7128\ c_{c0}/c_{c1} + 0.1619)) \tag{11}$$

As mentioned above, the compander, i.e. the compander gains (the compressor gain and the expander gain), is controlled by an auxiliary signal which consists of a combination of the sum and the difference signal of the FM signal. The audibility of distortions in conventional FM receivers depends, among other things, from the characteristics of the compressor and expander control circuits. The subband bandwidth of the control filter bank, the envelope detection circuit and the static compander characteristics mainly determine the audibility of distortions in conventional FM receivers.

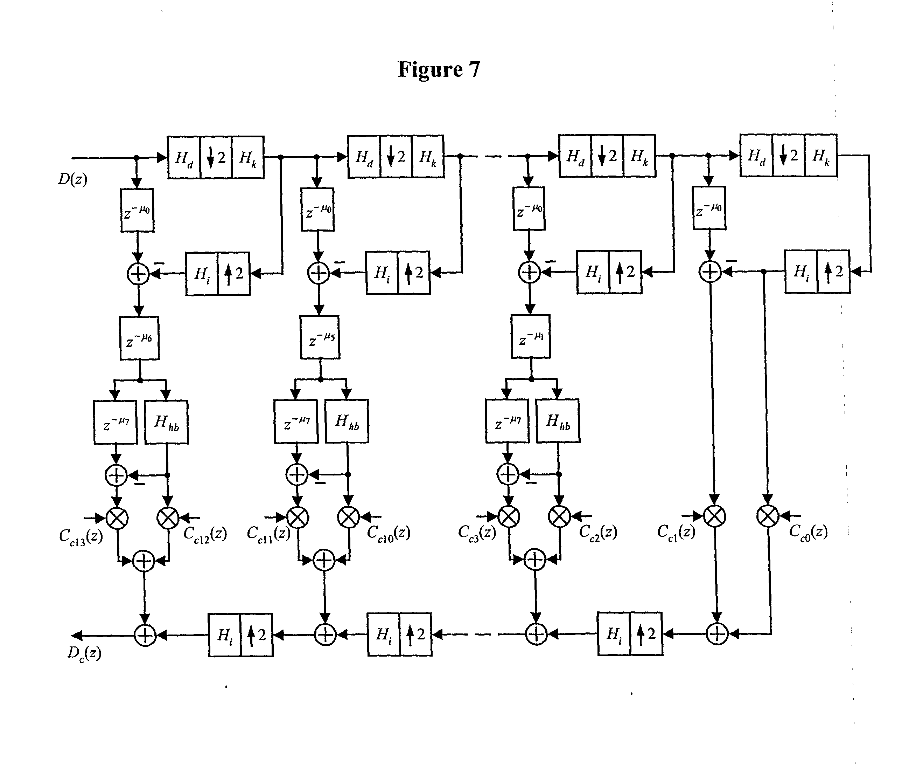

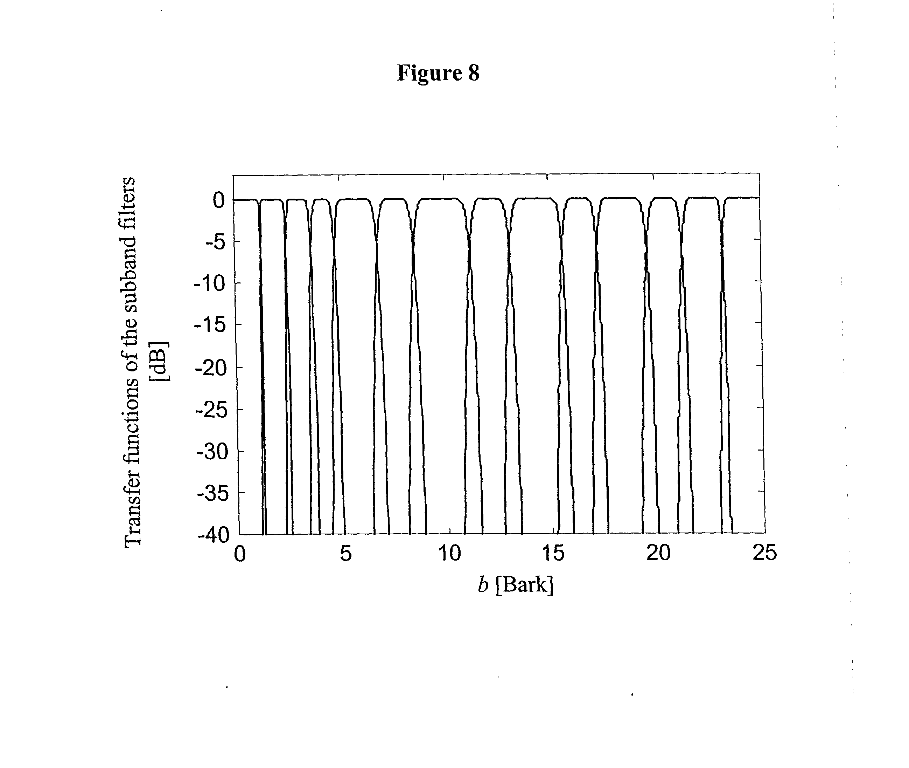

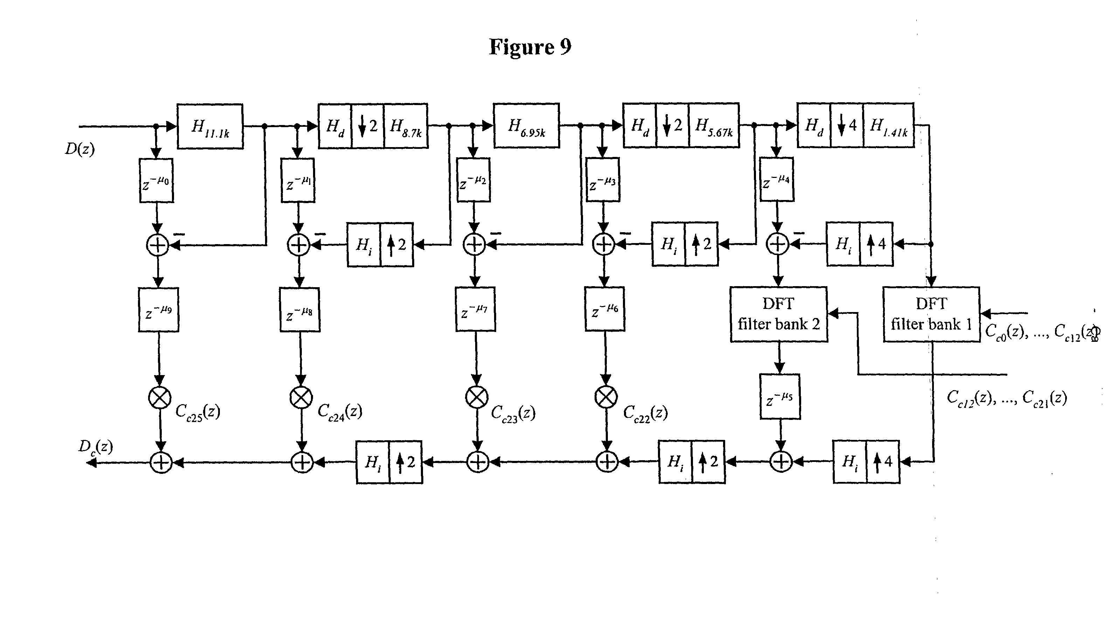

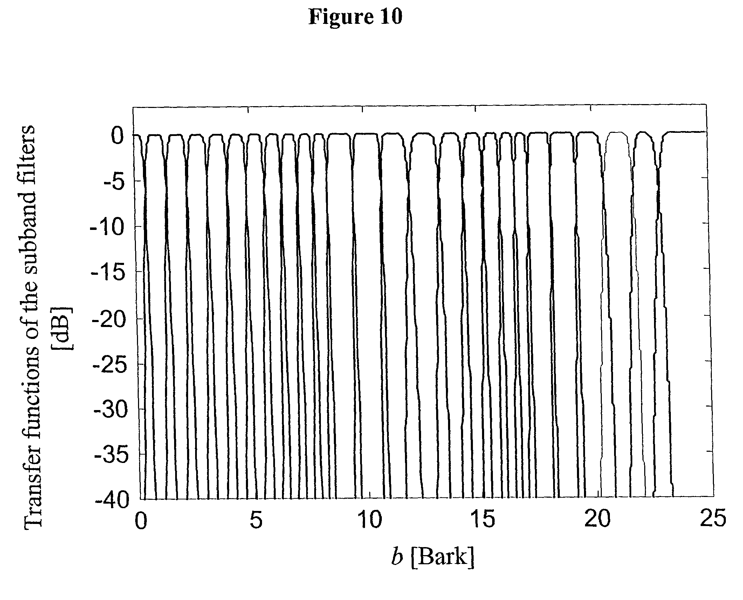

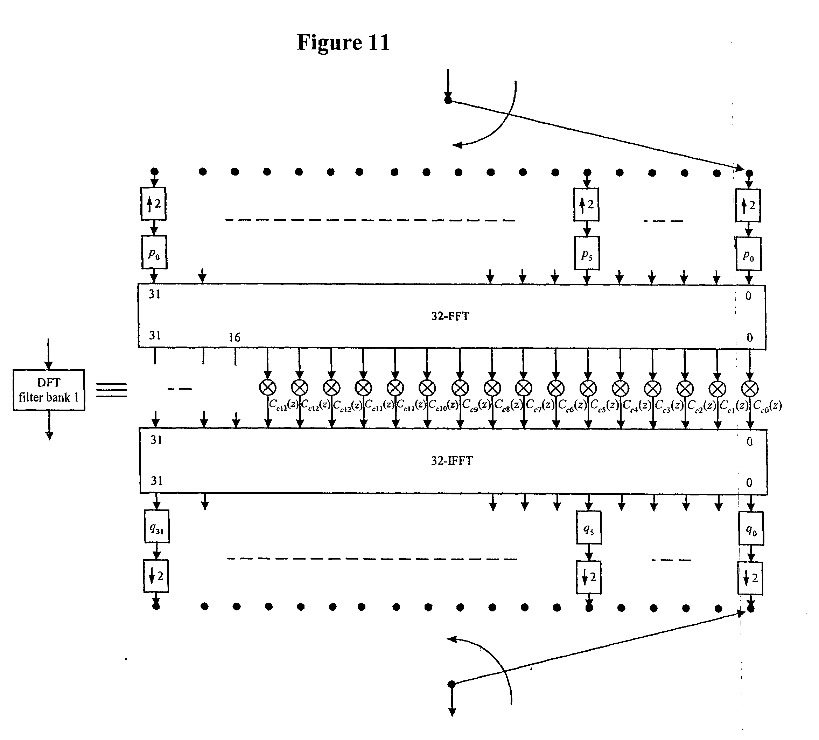

For the band splitting different state of the art filter banks might be used, e.g. a complementary filter bank like the 14-complementary filter bank shown in Fig. 7 which subband filters transfer functions are shown in Fig. 8. A hybrid filter bank like the 26-channel hybrid filter bank consisting of complementary filters and 2 oversampled DFT filter banks shown in Fig. 9 might also be used which subband filters transfer functions are shown in Fig. 10. Fig. 11 shows the oversampled 32-channel DFT filter bank 1 of Fig. 9 in more detail.

From the transfer functions shown in figures 8 and 10 it can clearly be seen that the composite transfer function of the multi-channel filter banks have a flat frequency response and that the single subbands are slightly overlapping.

**Claims**

1. Method for noise reduction of a FM signal, comprising the step of companding the difference signal (D(Z)) and transmitting the compressed difference signal ($D_c(z)$) within the FM multiplex signal, **characterized by** a linear phase multiband compression and/or multiband expansion.

2. Method according to claim 1, **characterized in that** the linear phase compression is performed with the following steps:

   - splitting the difference signal into n subband signals ($D_n(z)$) with a multiband filter (1) having a respective linear phase response for each of the subbands,
   - multiplying each on the n subband signals with a respective compressor gain ($c_{cn}$), and
   - adding all n compressed subband signals to generate the linear phase compressed difference signal.

3. Method according to claim 2, **characterized in that** the composite transfer function of the multiband filter (1) has a flat frequency response.

4. Method according to anyone of the preceding claims, **characterized in that** the linear phase compressed difference signal is filtered with a complementary equalisation filter (4) before transmission to equalise the amplitude distortions of the overall compressor/expander transfer function.

5. Method according to claim 4, **characterized in that** complementary equalisation filtering is realized depending on the respective compressor gains ($c_{cn}$).

6. Method according to claim 4, **characterized in that** complementary equalisation filtering is realized by an approximation which is independent of the respective compressor gains ($c_{cn}$) and a scaling which is dependent on the respective compressor gains ($c_{cn}$).

7. Method according to anyone of the preceding claims, **characterized in that** the multiband linear phase expansion is performed with the following steps:

   - splitting the received compressed difference signal ($Y_c(z)$) into n subband signals ($Y_{cn}(z)$) with a multiband filter (6) having a respective linear phase response for each of the subbands,
   - multiplying each on the n subband signals with a respective expander gain ($c_{en}$), and
   - adding all n expanded subband signals to one expanded difference signal ($Y_e(z)$).

8. Method according to claim 7, **characterized in that** the composite transfer function of the multiband filter (6) has a flat frequency response.

**9.** FM transmitter, comprising a compressor (1, 2, 3) for compressing the difference signal (D(z)), **characterized in that** said compressor (1, 2, 3) performs a linear phase compression.

**10.** FM transmitter according to claim 9, **characterized by** a complementary equalisation filter (4) to filter the linear phase compressed difference signal.

**11.** FM transmitter according to claim 10, **characterized in that** the complementary equalisation filter (4) comprises:

- an equalisation filter (4a) having such a transfer function that the amplitude distortions of the overall compressor/expander transfer function are reduced in the linear phase compressed difference signal,
- a delay element (4b) delaying the linear phase compressed difference signal with a delay corresponding to the group delay of the equalisation filter (4a), and
- a subtracter (4c) subtracting the output signal of the equalization filter (4a) from the delayed linear phase compressed difference signal output by the delay element (4b) to generate a equalised linear phase compressed difference signal to be transmitted.

**12.** FM transmitter according to claim 9, 10 or 11, **characterized in that** the linear phase compressor (1, 2, 3) comprises:

- a multiband filter (1) comprising n subband filters ($1_n$) with a respective linear phase response for splitting the difference signal (D(z)) into n subband signals ($D_n(z)$),
- n multipliers ($2_n$) for multiplying each on the n subband signals with a respective compressor gain ($c_{cn}$), and
- an adder (3) for adding all n compressed subband signals to generate the linear phase compressed difference signal.

**13.** FM transmitter according to claim 12, **characterized in that** the composite transfer function of the multiband filter (1) has a flat frequency response.

**14.** FM transmitter according to claim 12 or 13, **characterized in that** the multiband filter (1) is realized as an oversampled hybrid filter bank.

**15.** FM receiver, comprising an expander (6, 7, 8) for expanding a received compressed difference signal ($Y_c(z)$), **characterized in that** said expander (6, 7, 8) performs a linear phase expansion.

**16.** FM receiver according to claim 15, **characterized in that** the linear phase expander (6, 7, 8) comprises:

- a multiband filter (6) comprising n subband filters ($6_n$) with a respective linear phase response for splitting the compressed difference signal ($Y_c(z)$) into n subband signals ($Y_{cn}(z)$),
- n multipliers ($7_n$) for multiplying each on the n subband signals ($Y_{cn}(z)$) with a respective expander gain ($c_{en}$), and
- an adder (8) for adding all n expanded subband signals to generate the linear phase expanded difference signal ($Y_e(z)$).

**17.** FM receiver according to claim 16, **characterized in that** the composite transfer function of the multiband filter (6) has a flat frequency response.

**18.** FM receiver according to claim 16 or 17, **characterized in that** the multi-band filter (6) is realized as an oversampled hybrid filter bank.

**19.** Computer program product, comprising computer program means adapted to perform the method steps for the compression and/or the expansion as defined in anyone of claims 1 to 8 when said computer program product is executed on a computer, digital signal processor, or the like.

**20.** Computer program product, comprising computer program means adapted to embody the features of the FM transmitter as defined in anyone of claims 8 to 14 when said computer program product is executed on a computer, digital signal processor, or the like.

**21.** Computer program product, comprising computer program means adapted to embody the features of the FM receiver as defined in anyone of claims 15 to 18 when said computer program product is executed on a computer, digital signal processor, or the like.

## Figure 1

a)

b)

## Figure 2

EP 1 289 157 A1

**Figure 3**

**Figure 4**

**Figure 5**

**Figure 6**

Figure 7

EP 1 289 157 A1

Figure 8

Transfer functions of the subband filters [dB]

b [Bark]

EP 1 289 157 A1

**Figure 9**

Figure 10

EP 1 289 157 A1

Figure 11

EP 1 289 157 A1

**European Patent Office**

**EUROPEAN SEARCH REPORT**

Application Number

EP 01 12 0334

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| A | US 4 602 381 A (CUGNINI ALDO G ET AL) 22 July 1986 (1986-07-22) * column 11, line 3 - column 15, line 40; figures 9,10 * | 1-21 | H04B1/16 H04B1/62 |
| A | US 4 672 633 A (CLAASEN THEODOOR A C M ET AL) 9 June 1987 (1987-06-09) * column 4, line 55 - column 7, line 47; figures 1,5-7 * | 1-4, 9-12,15, 16 | |

TECHNICAL FIELDS SEARCHED (Int.Cl.7)

H04B

The present search report has been drawn up for all claims

| Place of search | Date of completion of the search | Examiner |
|---|---|---|
| THE HAGUE | 7 February 2002 | Andersen, J.G. |

## ANNEX TO THE EUROPEAN SEARCH REPORT
## ON EUROPEAN PATENT APPLICATION NO.

EP 01 12 0334

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2002

| Patent document cited in search report | | Publication date | Patent family member(s) | | Publication date |
|---|---|---|---|---|---|
| US 4602381 | A | 22-07-1986 | AT | 56114 T | 15-09-1990 |
| | | | AU | 578792 B2 | 03-11-1988 |
| | | | AU | 5306986 A | 29-07-1986 |
| | | | BR | 8507150 A | 31-03-1987 |
| | | | CA | 1243359 A1 | 18-10-1988 |
| | | | DE | 3579460 D1 | 04-10-1990 |
| | | | DK | 234086 A ,B, | 03-09-1986 |
| | | | EP | 0207964 A1 | 14-01-1987 |
| | | | JP | 3008138 B | 05-02-1991 |
| | | | JP | 61502160 T | 25-09-1986 |
| | | | KR | 9006261 B1 | 27-08-1990 |
| | | | NO | 862139 A ,B, | 04-11-1986 |
| | | | WO | 8604201 A1 | 17-07-1986 |
| US 4672633 | A | 09-06-1987 | NL | 8400676 A | 01-10-1985 |
| | | | AU | 580928 B2 | 02-02-1989 |
| | | | AU | 3940785 A | 05-09-1985 |
| | | | CA | 1290062 A1 | 01-10-1991 |
| | | | DE | 3571110 D1 | 20-07-1989 |
| | | | EP | 0155048 A1 | 18-09-1985 |
| | | | JP | 1965380 C | 25-08-1995 |
| | | | JP | 6101749 B | 12-12-1994 |
| | | | JP | 60206249 A | 17-10-1985 |

For more details about this annex : see Official Journal of the European Patent Office, No. 12/82